Europäisches Patentamt

European Patent Office

Office européen des brevets

(11) Numéro de publication : **0 018 464**
**B1**

# (12) FASCICULE DE BREVET EUROPÉEN

(45) Date de publication du fascicule du brevet :
02.12.81

(51) Int. Cl.³ : **F 16 L 17/00, F 16 L 27/12**

(21) Numéro de dépôt : **80100252.8**

(22) Date de dépôt : **12.09.78**

(60) Numéro de publication de la demande initiale en application de l'article 76 CBE : **0001363**

(54) **Dispositif de commande du gonflage d'un joint d'étanchéité placé entre deux tubes coulissant l'un dans l'autre.**

(30) Priorité : 20.09.77 FR 7728262

(43) Date de publication de la demande :
12.11.80 (Bulletin 80/23)

(45) Mention de la délivrance du brevet :
02.12.81 Bulletin 81/48

(84) Etats contractants désignés :
CH DE NL

(56) Documents cités :
FR - A - 727 308
FR - A - 1 601 135

(73) Titulaire : **COMPAGNIE D'ETUDES ET DE REALISATION DE CYBERNETIQUE INDUSTRIELLE**
**56 rue Roger Salengro**
**F-94120 Fontenay-sous-Bois (FR)**

(72) Inventeur : **Heitz, Pierre**
**A 55-1, rue Charles Lorilleux**
**F-92800 Puteaux (FR)**

(74) Mandataire : **Le Brusque, Maurice et al**
**CREUSOT-LOIRE 15 rue Pasquier**
**F-75383 Paris Cedex 08 (FR)**

Imprimerie Jouve, 17, rue du Louvre, 75001 Paris, France

Dispositif de commande du gonflage d'un joint d'étanchéité placé entre deux tubes coulissant l'un dans l'autre.

L'invention a pour objet un dispositif de commande du gonflage d'un joint d'étanchéité placé entre deux tubes coulissant l'un dans l'autre.

Dans des applications diverses, on utilise des conduites déplaçables le long de leur axe et se composant d'un tube externe fixe, les deux tubes prenant appui, en fin de course, l'un sur l'autre. Pour assurer l'étanchéité, on peut utiliser un presse-étoupe, mais on a déjà proposé à cet effet de placer dans l'espace annulaire entre les deux tubes, un joint gonflable qui, lorsqu'il est dégonflé, permet le coulissement du tube interne en le guidant éventuellement et qui assure l'étanchéité, lorsqu'il est gonflé, en s'appliquant avec force sur les parois des tubes.

Généralement un tel joint est gonflé par un fluide sous pression, gazeux ou liquide et l'installation doit comporter un système extérieur de gonflage du joint.

L'invention a pour objet un système de gonflage du joint particulièrement simple et économique et qui est mis en œuvre automatiquement dès que les tubes prennent appui l'un sur l'autre.

Selon l'invention, l'alimentation du joint en fluide sous pression est obtenue directement à partir de l'effort d'appui de l'un des tubes sur l'autre.

Le plus souvent, le tube interne et le tube externe prennent appui l'un sur l'autre par l'intermédiaire de butées, qui peuvent être par exemple des collets solidaires chacun d'un tube et s'étendant entre les deux tubes. Dans ce cas, le moyen de gonflage du joint selon l'invention pourra être constitué d'au moins un vérin interposé entre lesdites butées et relié à l'intérieur du joint par une conduite d'alimentation en fluide.

L'invention va maintenant être décrite, en se référant à un mode de réalisation particulier donné à titre d'exemple et représenté sur les dessins annexés.

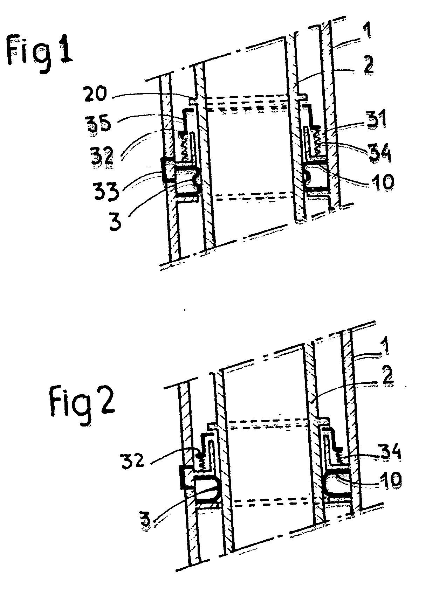

Les figures 1 et 2 représentent respectivement en position ouverte et fermée, un joint gonflable placé entre deux tubes et un dispositif de commande, selon l'invention, du gonflage du joint.

Sur les figures 1 et 2, on a représenté deux tubes (1) et (2) coulissant l'un dans l'autre et munis de brides ou collets (10) et (20) qui viennent s'appuyer en butée l'une sur l'autre en fin de coulissement.

Un joint gonflable (3) permet d'assurer l'étanchéité entre les deux tubes. Il se compose d'une enveloppe annulaire creuse fixée sur le tube (1) sous la bride (10) et qui, selon une disposition bien connue, est rétractée, comme sur la figure 1 pour permettre le coulissement libre du tube interne (2), et s'applique par gonflage sur la paroi de ce dernier pour assurer l'étanchéité, comme représenté sur la figure 2.

Généralement ce genre de joint est branché sur un circuit d'alimentation extérieur, hydraulique ou pneumatique, qui est mis en pression lorsqu'il reçoit un ordre de commande donné par exemple par un contacteur électrique ou, manuellement, par un opérateur.

Ce genre de circuit nécessite donc un appareillage relativement complexe qui peut être l'objet de défaillance et qui n'est souvent justifié que lorsqu'on dispose déjà, pour d'autres objets, d'un circuit hydraulique ou pneumatique.

Le système de gonflage du joint selon l'invention présente l'avantage d'être simple, peu encombrant et sûr.

Il se compose d'un vérin placé entre les collets de butée des tubes et qui, dans l'exemple représenté, comprend une chambre annulaire (31) ménagée au-dessus de la butée (10) et fermée par un piston annulaire (32) ; la chambre (31) est reliée à l'intérieur du joint (3) par une canalisation (33) d'alimentation en fluide de gonflage du joint.

Le piston (32) est solidaire d'autre part d'une virole (35) dont la partie supérieure constitue la butée sur laquelle vient s'appuyer la butée (20) en fin de coulissement, ce qui détermine l'enfoncement du piston (32) et le transfert d'une quantité correspondante de fluide dans le joint (3) qui se gonfle.

L'enfoncement du piston (32) s'arrête lorsque la pression du fluide de gonflage équilibre l'effort appliqué sur la butée (20), correspondant généralement au poids du tube (2).

Lorsque le tube (2) est remonté, la pression dans le joint tombe, libérant le tube (2) ; un ressort (34) placé dans la chambre (31) soulève le piston (32) qui a tendance à revenir dans sa position initiale. Le fluide de gonflage est réaspiré dans la chambre (31) et le joint (3) se rétracte, pour revenir à la position de la figure 1.

On voit que le dispositif est autonome et peu encombrant puisqu'il peut être placé dans un simple renflement du tube (1).

Le joint qui vient d'être décrit peut faire l'objet de diverses applications et peut être utilisé s'il y a lieu d'établir une étanchéité entre deux tubes coulissant l'un dans l'autre. Il s'agit évidemment d'un mouvement relatif et les deux tubes pourraient également se déplacer ensemble, le déplacement du joint ne posant aucun problème puisqu'il est autonome.

En outre le tube extérieur pourrait être constitué d'une enceinte cylindrique fixe entourant le tube interne sur une faible hauteur.

Bien entendu, l'invention ne se limite pas aux détails du mode de réalisation qui vient d'être décrit, celui-ci pouvant faire l'objet de variantes et le principe de l'invention pouvant être appliqué par des moyens équivalents.

**Revendications**

1. Dispositif de commande du gonflage d'un joint d'étanchéité placé entre deux tubes coulissant l'un dans l'autre et prenant appui l'un sur l'autre, comprenant un joint gonflable (3) disposé dans un espace annulaire ménagé entre les deux tubes (1, 2) et un moyen d'alimentation en fluide pour le gonflage du joint et son application sous pression sur les parois des deux tubes, caractérisé par le fait que l'alimentation du joint en fluide sous pression est obtenue directement à partir de l'effort d'appui de l'un des tubes (2) sur l'autre (1).

2. Dispositif selon la revendication 1, caractérisé par le fait que, le tube interne (2) et le tube externe (1) prenant appui l'un sur l'autre de façon connue par l'intermédiaire d'au moins deux butées (10), (20) solidaires chacune d'un tube et s'étendant dans l'espace annulaire entre les deux tubes, respectivement vers l'intérieur à partir du tube externe (1) et vers l'extérieur à partir du tube interne (1), le moyen d'alimentation en fluide de gonflage du joint comprend au moins un vérin (32) interposé entre lesdites butées et dont la chambre active (31) est reliée à l'intérieur du joint gonflable (3) par une conduite (33) d'alimentation en fluide.

3. Dispositif selon la revendication 2, caractérisé par le fait que, le vérin d'alimentation en fluide de gonflage comprend une chambre annulaire (31) placée entre les deux tubes au-dessus de la butée (10) du tube externe (1) et fermée à sa partie supérieure par un piston annulaire (32) solidaire d'une virole (35) dont la partie supérieure constitue la butée sur laquelle vient s'appuyer la butée (20) du tube interne (2) en fin de coulissement.

**Claims**

1. Apparatus for controlling inflation of a seal positioned between two tubes sliding one within the other and bearing one on the other, comprising an inflatable seal (3) disposed in an annular space provided between the two tubes (1, 2) and a means of supplying fluid for the inflation of the seal and its application under pressure to the walls of the two tubes, characterised by the fact that the supplying of the seal with fluid under pressure is obtained directly from the force of one of the tubes (2) bearing on the other (1).

2. Apparatus according to Claim 1, with the inner tube (2) and the outer tube (1) bearing on each other by way of at least two stops (10), (20) each solid with one tube and extending into the annular space between the two tubes, respectively inwards from the outer tube (1) and outwards from the inner tube (2), characterised by the fact that the means of supplying the seal with inflating fluid comprises at least one actuator (32) interposed between the said stops and whose active chamber (31) is connected to the interior of the inflatable seal (3) by a fluid supply conduit (33).

3. Apparatus according to Claim 2, characterised by the fact that the inflation fluid supplying actuator comprises an annular chamber (31) positioned between the two tubes above the stop (10) of the outer tube (1) and closed at its upper part by an annular piston (32) solid with a sleeve (35) whose upper part constitutes the stop on which the stop (20) of the inner tube (2) comes to bear at the end of sliding.

**Ansprüche**

1. Steuervorrichtung zum Aufblasen eines zwischen zwei ineinandergleitenden und sich aufeinander stützenden Rohren angeordneten Dichtrings mit einem in einem ringförmigen Raum zwischen beiden Rohren (1, 2) angeordneten aufblasbaren Dichtring (3) und einem fluidumversorgungsmittel zum Aufblasen des Dichtrings und dessen Andrücken an die Wände der beiden Rohre, dadurch gekennzeichnet, dass die Versorgung des Dichtrings mit dem Druckfluidum direkt durch die Druckkraft des einen Rohrs (2) auf das andere (1) erzielt wird.

2. Vorrichtung nach Anspruch 1, dadurch gekennzeichnet, dass das Innenrohr (2) und das Aussenrohr (1) auf bekannte Weise über mindestens zwei Anschläge (10, 20) sich aufeinander stützen, die jeweils mit einem Rohr formschlüssig verbunden sind und in die Ringkammer zwischen beiden Rohren jeweils nach innen vom Aussenrohr (1) ausgehend und nach aussen vom Innenrohr (2) ausgehend reichen und das Versorgungsmittel zum Aufblasen des Dichtrings sich mindestens aus einem Zylinder (32) zwischen diesen Anschlägen zusammensetzt und dessen aktive Kammer (31) mit dem Innenraum des aufblasbaren Dichtrings (3) durch eine Leitung (33) zur Versorgung mit dem fluidum verbunden ist.

3. Vorrichtung nach Anspruch 2, dadurch gekennzeichnet, dass der Zylinder zur Versorgung mit dem Aufblasfluidum eine zwischen beiden Rohren oberhalb des Anschlags (10) des Aussenrohrs (1) angeordnete Ringkammer (31) aufweist, die am Oberteil durch einen Ringkolben (32) verschlossen ist, der mit einem Ring (35) formschlüssig verbunden ist, dessen Oberteil den Anschlag bildet, auf den sich der Anschlag (20) des Innenrohrs (2) am Ende des Gleitens stützt.

Fig 1

Fig 2